Europäisches Patentamt

European Patent Office

Office européen des brevets

(11) Publication number: **0 257 722 B1**

# EUROPEAN PATENT SPECIFICATION

(45) Date of publication of patent specification: **02.01.92**    (51) Int. Cl.⁵: **C10J  3/46**, C10J 3/48, C01B 3/32

(21) Application number: **87201635.7**

(22) Date of filing: **28.08.87**

The file contains technical information submitted after the application was filed and not included in this specification

(54) **Process and apparatus for the production of synthesis gas.**

(30) Priority: **29.08.86 GB 8620993**

(43) Date of publication of application:
**02.03.88 Bulletin  88/09**

(45) Publication of the grant of the patent:
**02.01.92 Bulletin  92/01**

(84) Designated Contracting States:
**DE GB IT NL**

(56) References cited:
DE-A- 2 705 558
DE-B- 1 217 014
US-A- 3 988 123

(73) Proprietor: **SHELL INTERNATIONALE RE-SEARCH MAATSCHAPPIJ B.V.**
**Carel van Bylandtlaan 30**
**NL-2596 HR Den Haag(NL)**

(72) Inventor: **van der Burgt, Maarten Johannes**
**Carel van Bylandtlaan 30**
**NL-2596 HR The Hague(NL)**

(74) Representative: **Spierenburg, Jan et al**
**Shell Internationale Research Maatschappij**
**B.V. Patents, Licensing & Trade Marks Division P.O. Box 302**
**NL-2501 CH The Hague(NL)**

## Description

The invention relates to a process and apparatus for producing a gas mixture containing hydrogen and carbon monoxide by partial combusting a carbon-containing fuel with an oxygen-containing gas.

When the oxygen-containing gas is air or oxygen-enriched air, the gas mixture containing hydrogen and carbon monoxide formed also contains a substantial quantity of nitrogen. By carbon-containing fuel is generally meant coal or another solid fuel, such as brown coal, peat, wood, coke, soot etc., but liquid fuels such as tar sand oil or shale oil, mixtures of liquid and/or particulate solid fuels, and hydrocarbon gases are also possible.

Sometimes, a moderator is also introduced into the reactor or gasifier to exercise a moderating effect on the temperature of the gasifier, due to an endothermic reaction between the moderator and the reactants and/or products of the gas mixture containing hydrogen and carbon monoxide preparation. Suitable moderators are steam and carbon dioxide.

The gasification process is suitably carried out at a temperature in the range of from 1200 to 1700°C and at a pressure in the range of from 1 to 200 bar.

The gasifier in which the production of a gas mixture containing hydrogen and carbon monoxide takes place may have the shape of a sphere, cone block or a cylinder, the shape of a circular cylinder being advantageous.

From German Patent Application 24e, 3/06, S20692 (filed 27-10-1950 in the name of F. Sabel, published 25-10-1951) a process is known wherein ash and slag formed in the gasifier are initially separated from the gaseous products by centrifugal forces resulting from a sharp bend in the passage of the products. Thus ash and slag separate out in substantially liquid form, which on cooling may give rise to the formation of agglomerations of solid material, which cannot be easily removed. Further separation is performed by cooling, which is done in a separate vessel.

It is an object of the present invention to solve the problem of the formation of solid agglomerations by providing a method wherein the gasification is followed immediately by quenching and instantaneous removal of the major part of ash and slag. It is another object of the present invention to provide a compact apparatus for carrying out the said method.

The present invention therefore provides a process for producing synthesis gas by the partial combustion of a carbon-containing fuel with an oxygen-containing gas in a reactor wherein the synthesis gas obtained is discharged through an outlet at the bottom of the reactor and is fed through a waste heat boiler connected to and located essentially vertically below the reactor and a quench zone and wherein slag is removed through the outlet in the bottom of the reactor and passed vertically by gravity and a quench medium is supplied and is contacted with the slag leaving the reactor, characterized in that the slag with the bulk of the ash falls vertically through a slag discharge means into a water bath located below the waste heat boiler, said slag discharge means being arranged in such a manner that the said outlet of the reactor debouches into the slag discharge means which is open at its top, extends inside the waste heat boiler and empties itself into the said water bath, in which ash and slag are further cooled and wherein the arrangement of the waste heat boiler is such that the gas mixture in the waste heat boiler flows downwards and cocurrently with the ash and slag stream but spatially separated therefrom, whereby the slag and ash discharge means and the waste heat boiler are disposed in a coaxial arrangement such that the inner circle of this coaxial arrangement forms the slag and ash discharge means and the gas mixture flows in an annulus formed around said discharge means and wherein the downstream end of the cooling channel for the gas mixture (annulus around the slag and ash discharge means) is not in fluid communication with the slag and ash discharge means so that the gas mixture leaves the waste heat boiler at its downstream end separated from the slag and ash stream.

The invention also provides an apparatus for the partial combustion of a carbon-containing fuel with an oxygen-containing gas, which apparatus comprises a reactor which is equipped with a gas outlet at the bottom and a waste heat boiler connected to and located essentially vertically below the reactor and a quench zone, and a supply means is present for supplying a quench medium in such a way that the quench medium is contacted with the slag leaving the reactor characterized in that a slag discharging means is extending essentially vertically inside the waste heat boiler below the outlet of the reactor and is arranged in such a manner that the outlet of the reactor debouches into the slag discharge means which is open at its top and empties itself into a water bath located below the waste heat boiler, in which water bath ash and slag are further cooled and wherein the arrangement of the waste heat boiler is such that the gas mixture in the waste heat boiler flows downwards and co-currently with the ash and slag stream but spatially separated therefrom, whereby the slag and ash discharge means and the waste heat boiler are disposed in a coaxial arrangement such that the inner circle of this coaxial arrangement forms the slag and ash discharge means and the gas mixture flows in an annulus formed around said discharge means and wherein the downstream end of the cooling channel for the gas mixture (annulus around the slag and ash discharge means) is not in fluid communication with the slag and ash discharge means so that the gas mixture leaves the waste heat boiler at its downstream end separated from the slag and ash stream.

Advantageously, such a process makes use of a downflow gasifier, into whose upper part the carbon-containing fuel and the oxygen-containing gas are simultaneously injected. These components may be injected in the form of one or more jets, which are directed horizontally or vertically downwards or obliquely downwards.

The combustion products formed enter into a quench zone, positioned below the gasifier, and are subjected to one or more streams of cooling medium. Thus, the temperature of the combustion products is reduced to such a level as to make the ash and the slag solidify, but remains high enough to permit downstream recovery of a substantial portion of the heat of the combustion products.

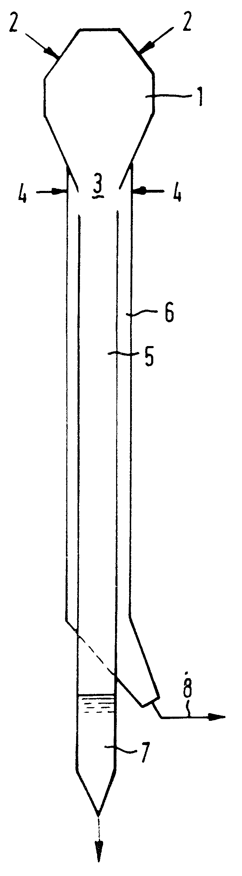

The invention will now be described by way of example in more detail with reference to the drawing, in which the Figure shows a diagrammatic representation of a longitudinal section of an apparatus according to the invention for the production of a gas mixture containing hydrogen and carbon monoxide by partial combustion of a carbon-containing fuel with an oxygen-containing gas. Referring to the Figure, a gasifier 1 has been shown. Via supply means 2 in the top of the gasifier 1 carbon-containing fuel, an oxygen-containing gas and optionally a moderator are injected into the gasifier. Partial combustion under appropriate conditions produces a gas mixture containing hydrogen and carbon monoxide and ash and slag, which leave the gasifier through an outlet 3 in the bottom of the gasifier. Here the product gas is quenched by a cooling medium, which enters a quench zone through inlets 4. The major part of ash and slag, which are cooled, fall into a slag discharge means 5, which is advantageously surrounded by the outer shell of a waste heat boiler 6 and discharges into a slag bath 7. This slag bath can be a water bath. The waste heat boiler comprises cooling means such as coils or panels which have not been represented for reasons of clarity. From the slag bath 7 the slag is discharged to a suitable disposal means, e.g. a slag lock hopper (not shown). The gas mixture obtained, which may still contain some ash and slag contaminants, is cooled in the waste heat boiler 6 and leaves the latter through an outlet 8 to undergo further treatment, if necessary, such as removal of contaminants.

It will be appreciated that the slag discharge means 5 can be positioned immediately below the outlet of the gasifier and may have its upper end in the quench zone. Advantageously, the slag discharge means 5 may extend alongside the waste heat boiler.

The pressures prevailing in the gasifier, waste heat boiler and slag discharge means are such that the discharge of product gas from the gasifier into the slag discharge means 5 is prevented and substantially all product gas is passed into the waste heat boiler. Such process features as well as constructional features are not part of the invention and will not be described or shown in the Figure for reasons of clarity.

The operation of the method and the apparatus of the invention is as follows:

In the quench zone the products leaving the gasifier are quickly cooled down to about 700-900°C. The cooling medium used therefore may be gas (for example cold recycled product gas) and/or steam generated in situ by the injection of liquid water. But more economically, at least part of the cooling medium may be made up by steam generated during any cooling operation applied in the process. For example, steam formed during the water bath cooling of ash and slag as described below may be suitably applied for this purpose. Another suitable source of steam is present in a particular embodiment of the invention, which will be discussed later.

The transition from gasifier to quench zone takes place through an outlet in the bottom of the gasifier. Conveniently, such an outlet has a tapered shape to facilitate collection of ash and slag. The outlet debouches into the slag discharge means, which advantageously is a vertical tube, which is open at its top and which empties itself into a water bath, in which ash and slag are further cooled.

Advantageously, the slag discharge means is placed inside the waste heat boiler. Thus a greater portion of the heat of the ash and slag is recovered, which improves the efficiency of the process.

The temperature in the gasifier, among other factors, influences the composition of the gas mixture formed. This temperature can be controlled by various methods, one of which being the degree of preheating the reactants prior to their being injected into the gasifier.

In a particular embodiment of the invention the gasifier is surrounded by a water jacket. If inside the water jacket steam is formed, this can be used as cooling medium in the quench zone or at least as part of the cooling medium needed.

The gas mixture containing hydrogen and carbon monoxide entering the waste heat boiler has a temperature between 700 and 900°C. In the waste heat boiler indirect heat transfer takes place from the gas to for example cooling panels, causing the temperature of the gas to drop to about 200-250°C. As cooling medium usually water is used, which is partly or wholly converted into steam, which may suitably used in the process or elsewhere.

The wall between the slag discharge means and the waste heat boiler can be constructed in any way suitable for the purpose, for example as a cylindrical cooling panel (tubes welded on a metal sheet) which can be rapped in order to avoid fouling. The diameter of such tubes can for example be in the range of 1-4 cm.

It is inevitable that part of the ash and slag is entrained by the gas mixture as small droplets or particles. Therefore, these contaminating components should be removed from the gas mixture after the latter has left the waste heat boiler. For this purpose the gas mixture with entrained contaminating components is passed through a cyclone or other suitable apparatus.

At this stage of the process the gas mixture has still a temperature of about 200-250°C. A convenient way of further cooling is by the injection of water or steam into the gas. This raises the water content of the gas, which can be advantageous if the gas mixture is used as starting material for CO shift. Also, the water present can be of use to control $NO_x$ emission when the gas mixture is combusted.

The present invention can further be illustrated by reference to the following data, showing by way of example the sizing of the configuration according to the invention:

Unit capacity: 1000 t/d Illinois No. 6 coal;

Process conditions of gas ex gasifier: 5.40 $m^3$/s, 25 bar, 1450°C;

Process conditions of recycle gas used as quench medium:

1.75 $m^3$/s, 26 bar, 200°C;

Diameter of gasifier : 2.5-3.0 m

Length of gasifier : 5-8 m

Diameter of gasifier exit : 0.8-1.2 m

Diameter of slag discharge means : 0.8-1.2 m

Diameter of waste heat boiler : 1.5-1.8 m

Length of waste heat boiler : 15-25 m.

Various modifications of the present invention will become apparent to those skilled in the art from the foregoing description and accompanying drawing. Such modifications are intended to fall within the scope of the appended claims.

**Claims**

1. A process for producing synthesis gas by the partial combustion of a carbon-containing fuel with an oxygen-containing gas in a reactor wherein the synthesis gas obtained is discharged through an outlet at the bottom of the reactor and is fed through a waste heat boiler connected to and located essentially vertically below the reactor and a quench zone and wherein slag is removed through the outlet in the bottom of the reactor and passed vertically by gravity and a quench medium is supplied and is contacted with the slag leaving the reactor, characterized in that the slag with the bulk of the ash falls vertically through a slag discharge means into a water bath located below the waste heat boiler, said slag discharge means being arranged in such a manner that the said outlet of the reactor debouches into the slag discharge means which is open at its top, extends inside the waste heat boiler and empties itself into the said water bath, in which ash and slag are further cooled and wherein the arrangement of the waste heat boiler is such that the gas mixture in the waste heat boiler flows downwards and co-currently with the ash and slag stream but spatially separated therefrom, whereby the slag and ash discharge means and the waste heat boiler are disposed in a coaxial arrangement such that the inner circle of this coaxial arrangement forms the slag and ash discharge means and the gas mixture flows in an annulus formed around said discharge means and wherein the downstream end of the cooling channel for the gas mixture (annulus around the slag and ash discharge means) is not in fluid communication with the slag and ash discharge means so that the gas mixture leaves the waste heat boiler at its downstream end separated from the slag and ash stream.

2. An apparatus for the partial combustion of a carbon-containing fuel with an oxygen-containing gas, which apparatus comprises a reactor which is equipped with a gas outlet at the bottom and a waste heat boiler connected to and located essentially vertically below the reactor and a quench zone, and a supply means is present for supplying a quench medium in such a way that the quench medium is contacted with the slag leaving the reactor characterized in that a slag discharging means is extending essentially vertically inside the waste heat boiler below the outlet of the reactor and is arranged in such a manner that the outlet of the reactor debouches into the slag discharge means which is open at its top and empties itself into a water bath located below the waste heat boiler, in which water bath ash and slag are further cooled and wherein the arrangement of the waste heat boiler is such that the gas mixture in the waste heat boiler flows downwards and co-currently with the ash and slag stream but spatially separated therefrom, whereby the slag and ash discharge means and the waste heat boiler are disposed in a coaxial arrangement such that the inner circle of this coaxial arrangement forms the slag and ash discharge means and the gas mixture flows in an annulus formed around said discharge means and wherein the downstream end of the cooling channel for the gas mixture (annulus around the slag and ash discharge means) is not in fluid communication with the slag and ash discharge means so that the gas mixture leaves the waste heat boiler at its downstream end separated from the slag and ash stream.

**Revendications**

1. Procédé de production d'un gaz de synthèse par combustion partielle d'un combustible contenant du carbone avec un gaz renfermant de l'oxygène dans un réacteur dans lequel le gaz de synthèse obtenu est déchargé par une sortie dans le fond du réacteur et est admis dans une chaudière à chaleur perdue reliée au réacteur et disposée d'une façon sensiblement verticale au dessous du réacteur et d'une zone de refroidissement, et dans lequel les scories sont soutirées par la sortie dans le fond du réacteur et sont acheminées verticalement par gravité et un milieu de refroidissement est fourni et mis en contact avec les scories qui sortent du réacteur, caractérisé en ce que les scories et la majeure partie des cendres tombent verticalement à travers un moyen de décharge de scories dans un bain d'eau disposé au dessous de la chaudière à chaleur perdue, ledit moyen de décharge de scories étant agencé de façon que ladite sortie du réacteur débouche dans le moyen de décharge de scories qui est ouvert au sommet, s'étend à l'intérieur de la chaudière à chaleur perdue et se vide dans ledit bain d'eau, dans lequel les cendres et les scories sont encore refroidies et dans lequel l'agencement de la chaudière à chaleur perdue est tel que le mélange gazeux dans la chaudière à chaleur perdue s'écoule vers le bas et en équicourant avec le courant de cendres et de scories, mais spatialement séparé de celui-ci, de sorte que la moyen de- décharge de scories et de cendres et la chaudière à chaleur perdue sont disposés suivant un agencement coaxial tel que le cercle intérieur de cet agencement coaxial forme le moyen de décharge de scories et de cendres et que le mélange gazeux s'écoule dans la zone annulaire formée autour dudit moyen de décharge et dans lequel l'extrémité en aval du canal de refroidissement pour le mélange gazeux (zone annulaire autour du moyen de décharge de scories et de cendres) n'est pas en communication fluide avec le moyen de décharge des scories et des cendres de sorte que le mélange gazeux sort de la chaudière à chaleur perdue à son extrémité en aval séparé du courant des scories et des cendres.

2. Appareil de combustion partielle d'un combustible contenant du carbone avec un gaz renfermant de l oxygène, appareil qui comprend un réacteur muni d'une sortie de gaz dans le bas et une chaudière à chaleur perdue reliée au réacteur et disposée à peu près verticalement au dessous de celui-ci et une zone de refroidissement, et un moyen distributeur permet de fournir un milieu de refroidissement de manière que ce milieu de refroidissement vienne en contact avec les scories sortant du réacteur, caractérisé en ce qu'un moyen de décharge de scories s'étend à peu près verticalement à l'intérieur de la chaudière à chaleur perdue au dessous de la sortie du réacteur et l'agencement est tel que la sortie du réacteur débouche dans le moyen de décharge de scories qui est ouvert sur le dessus et se vide dans un bain d'eau situé au dessous de la chaudière à chaleur perdue, bain d'eau dans lequel les scories et les cendres sont refroidies et dans lequel l'agencement de la chaudière à chaleur perdue est tel que le mélange gazeux dans la chaudière à chaleur perdue s'écoule vers le bas et en équicourant avec le courant de cendres et de scories, mais spatialement séparé de celui-ci, de sorte que la moyen de décharge de scories et de cendres et la chaudière à chaleur perdue sont disposés coaxialement de manière que le cercle intérieur dudit agencement coaxial forme le moyen de décharge de scories et de cendres et que le mélange gazeux s'écoule à travers une zone annulaire formée autour dudit moyen de décharge et dans lequel l'extrémité en aval du canal de refroidissement pour le mélangé gazeux (zone annulaire autour du moyen de décharge des scories et des cendres) n'est pas en communication fluide avec le moyen de décharge des scories et des cendres si bien que le mélange gazeux sort de la chaudière à chaleur perdue à son extrémité en aval séparé du courant de scories et de cendres.

**Patentansprüche**

1. Ein Verfahren zur Erzeugung von Synthesegas durch die Teilverbrennung eines kohlenstoffhaltigen Brennstoffes mit einem sauerstoffhaltigen Gas in einem Reaktor, in welchem das erhaltene Synthesegas durch einen Auslaß am Boden des Reaktors abgezogen wird und durch einen mit dem Reaktor verbundenen und im wesentlichen vertikal unter dem Reaktor angeordneten Abhitzekessel und eine Abschreckzone geleitet wird, und in welchem durch den Auslaß im Boden des Reaktors Schlacke entfernt und aufgrund der Schwerkraft senkrecht nach unten geleitet wird und ein Abschreckmittel zugeführt und mit der aus dem Reaktor austretenden Schlacke kontaktiert wird, dadurch gekennzeichnet, daß die Schlacke zusammen mit der Aschenmasse senkrecht durch eine Schlackeentsorgungsvorrichtung in ein Wasserbad fällt, welches unter dem Abhitzekessel angeordnet ist, wobei die genannte Schlackeentsorgungsvorrichtung derart angeordnet ist, daß der genannte Reaktorauslaß in die oben offene Schlakkeentsorgungsvorrichtung mündet, sich nach innen in den Abhitzekessel erstreckt und sich in das genannte Wasserbad entleert, wo Asche und Schlacke weiter abgekühlt werden, und in welchem der Abhitzekessel derart angeordnet ist, daß die Gasmischung in dem Abhitzekessel zusammen mit der Asche und der Schlacke, aber räumlich davon getrennt, nach unten strömt, wobei die Schlacke- und Ascheentsorgungsvorrichtung und der Abhitzekessel koaxial angeordnet sind, so daß der innere Kreis dieser koaxialen Anordnung von der Schlacke- und Ascheentsorgungsvorrichtung gebildet wird und die Gasmischung in einem um diese Entsorgungsvorrichtung herum angeordneten Ring strömt, und in welchem das stromabwärts befindliche Ende des Kühlkanals für die Gasmischung(Ring um die Schlacke- und Ascheentsorgungsvorrichtung) sich nicht in Fluidverbindung mit der Schlacke- und Ascheentsorgungsvorrichtung befindet, so daß die Gasmischung den Abhitzekessel an dessem stromabwärts befindlichen Ende, getrennt von der Schlacke und dem Aschestrom, verläßt.

2. Eine Vorrichtung für die Teilverbrennung eines kohlenstoffhaltigen Brennstoffes mit einem sauerstoffhaltigen Gas, welche Vorrichtung einen Reaktor umfaßt, welcher mit einem Gasauslaß am Boden und mit einem damit verbundenen und im wesentlichen senkrecht unter dem Reaktor angeordneten Abhitzekessel und mit einer Abschreckzone ausgestattet ist, und wobei eine Zuführeinrichtung für das Zuführen eines Abschreckmittels derart angeordnet ist, daß das Abschreckmittel mit der aus dem Reaktor austretenden Schlacke kontaktiert wird, dadurch gekennzeichnet, daß eine Schlackeentsorgungsvorrichtung sich im wesentlichen vertikal innerhalb des Abhitzekessels unter dem Auslaß des Reaktors erstreckt und so angeordnet ist, daß der Auslaß des Reaktors in die Schlackeentsorgungsvorrichtung, die oben offen ist, mündet und sich in ein Wasserbad entleert, das sich unter dem Abhitzekessel befindet, in welchem Wasserbad Asche und Schlacke weiter abgekühlt werden, und wobei der Abhitzekessel derart angeordnet ist, daß die Gasmischung in dem Abhitzekessel zusammen mit der Asche und der Schlacke, aber räumlich davon getrennt, nach unten strömt, wobei die Schlacke- und Ascheentsorgungsvorrichtung und der Abhitzekessel koaxial zueinander angeordnet sind, so daß der innere Kreis dieser koaxialen Anordnung von der Schlacke- und Ascheentsorgungsvorrichtung gebildet wird und die Gasmischung in einem um die genannte Entsorgungsvorrichtung herum gebildeten Ring strömt, und wobei das stromabwärts liegende Ende des Kühlkanals für die Gasmischung (Ring um die Schlacke- und Ascheentsorgungsvorrichtung herum) sich nicht in Fluidverbindung mit der Schlacke- und Ascheentsorgungsvorrichtung befindet, so daß die Gasmischung den Abhitzekessel an seinem stromabwärts liegenden Ende von der Schlacke und Asche getrennt verläßt.